# EUROPÄISCHE PATENTANMELDUNG

(11) **EP 2 530 661 A1**
(43) Veröffentlichungstag der Anmeldung: **05.12.2012**
(21) Anmeldenummer: 11405264.0
(22) Anmeldetag: 31.05.2011
(51) Int. Cl.: G07F 7/10, G06Q 20/00, G06F 21/00

(54) **Elektronisches System zur raschen und sicheren Abwicklung von Transaktionen mit mobilen Geräten**

(71) Anmelder: Avance Pay AG, 3123 Belp (CH)
(72) Erfinder: Bircher-Nagy, Heinz, 3123 Belp (CH); Danz, Peter, 3007 Bern (CH); Kronegger, Peter, 8010 Graz (AT)
(74) Vertreter: Bergmeier, Werner

(57) **Zusammenfassung**

Die Erfindung betrifft ein elektronisches System zur raschen und sicheren Abwicklung von Transaktionen mit mobilen Geräten (1), beispielsweise bei Bezahlvorgängen oder beim Überprüfen und Verrechnen von Fahrberechtigungen im öffentlichen Verkehr.
Gegenstand der Erfindung ist die Implementierung eines lokalen Stellvertretermodules (7) für die
Verrechnungszentrale (6) in einem integrierten, gesicherten Element (3). Das Stellvertretermodul (7) kann Bezahlungen und Berechtigungen ohne Datenverbindung zur Verrechnungszentrale (6) anhand von Autorisierungsregeln und Parameter (8)
überprüfen (11) und freigeben (12) oder verweigern (13). Die generierten Buchungsdaten (9) sowie die Autorisierungsregeln und Paramter (8) werden zu einem anderen Zeitpunkt mit der Verrechnungszentrale (6) abgeglichen (14). Das integrierte, gesicherte Element (3) gibt es in verschiedenen Ausführungsformen und ist bei Bedarf in ein Terminal (4) integrierbar. Das integrierte, gesicherte Element (3) ist beispielsweise ein einfach nachrüstbarer Teil eines handelsüblichen NFC Mobiltelefons, das dadurch zu einem Bezahlterminal wird.

## Beschreibung

### Gebiet der Erfindung

Die Erfindung betrifft ein elektronisches System zur raschen und sicheren Abwicklung von Transaktionen mit mobilen Geräten, beispielsweise bei Bezahlvorgängen oder beim Überprüfen und Verrechnen von Fahrberechtigungen im öffentlichen Verkehr.

### Hintergrund der Erfindung

Bekannt sind Bezahlsysteme, wie beispielsweise Kreditkartenterminals in Supermärkten und Tankstellen, bei denen die Erfassung der Transaktionsdaten in einem speziell eingriffsicheren Bezahlterminal erfolgt und die Autorisierung des Bezahlvorganges online bei der kontoführenden Verrechnungszentrale eingeholt wird. Ein Nachteil dieser Systeme sind lange Wartezeiten für die Autorisierung, die durch den Verbindungsaufbau zur Zentrale entstehen. Diese Systeme sind für schnelle Bezahlvorgänge zu langsam. Ein weiterer Nachteil entsteht durch die relativ hohen Kosten der Bezahlterminals. Diese verfügen in der Regel über Leser, PIN-Eingabe-Tasten, Schlüsselspeicher und Recheneinheit und müssen als ganzes Gerät eingriffsicher ausgeführt sein. Die Bezahlterminals sind entsprechend teuer in der Entwicklung, Zertifizierung und Herstellung. Änderungen an den zertifizierten Bezahlterminals oder auch der Einsatz für andere Anwendungen sind nicht gestattet und wären aufgrund der Eingriffsicherheit auch kaum möglich.

Bekannt sind auch Systeme, wie beispielsweise Fahrscheinsysteme für den öffentlichen Nahverkehr in Grossstädten wie Paris, London oder Tokio, bei denen für einen Buchungsvorgang keine Datenverbindung zur Verrechnungszentrale benötigt wird. Dieses Prinzip wird für schnelle Transaktionen beim Überprüfen der Fahrberechtigungen verwendet. Die Logik für den Buchungsvorgang läuft dabei in der Recheneinheit des Terminals ab. Diese Terminals sind aus Kostengründen gegen Eingriffe kaum geschützt. Ein weiterer Nachteil dieser Systeme ist, dass dazu grundsätzlich teure Kassenstellen oder Ticketautomaten benötigt werden, um das Fahrgeld in elektronische Fahrberechtigungen zu konvertieren. Zum einen limitiert der Preis für die Terminals und Kassenautomaten die Verbreitung dieser Systeme. Zum anderen würde eine Umstellung bestehender Infrastrukturen wie sie für die Einführung neuer Bezahlungsschemata notwendig wäre, teure Änderungen oder den Austausch der Hardware erfordern.

Ebenfalls bekannt sind Systeme wie WO2010/002541 A1 und US2011/0022482 A1, bei denen versucht wird, mittels NFC Mobiltelefonen kostengünstige, mobile Bezahlsysteme zu realisieren. Alle bekannten Systeme sind entweder online und daher langsam oder offline und ungenügend gesichert. Diese Systeme weisen damit viele der oben genannten Nachteile auf. Als besonders problematisch erweist sich dabei die Geschwindigkeit, die Handhabbarkeit, die reduzierte Sicherheit und die unzureichende Standardisierung.

Bekannt ist auch der Ansatz, sicherheitsrelevante Funktionen in integrierte, gesicherte Elemente einzubauen, wie beispielsweise in SIM-Karten. Integrierte, gesicherte Elemente bestehen mindestens aus einer Speichereinheit, einer Recheneinheit und einer Kommunikationsschnittstelle integriert auf einem einzigen Chip und möglicherweise mit kryptographischer Hilfsrecheneinheit oder anderen Untereinheiten. Verschiedene Sicherungsmechanismen schützen den Chip gegen Eingriffe. Aufgrund der hohen Eingriffsicherheit werden integrierte, gesicherte Elemente vorwiegend zum Speichern und Anwenden von Schlüsseln und anderen, sensitiven Daten verwendet. Integrierte, gesicherte Elemente werden daher insbesondere als Bezahlmittel, Fahrberechtigungskarten für den öffentlichen Nahverkehr, SIM-Karten für Mobiltelefone und Schlüsselspeicher eingesetzt, beispielsweise als Secure Access Module, kurz SAM. Der Nachteil bei diesen Einsatzgebieten ist, dass das Gegenstück zum Autorisieren des integrierten, gesicherten Elements ein über online Verbindungen angeschlossener Zentralrechner ist, was für eine schnelle Abwicklung von Transaktionen nicht geeignet ist. Im Fall von Fahrberechtigungskarten für den öffentlichen Nahverkehr erfolgt die Autorisierung der Fahrberechtigung meistens offline, jedoch in der gegen Eingriffe kaum gesicherten Recheneinheit der Terminals.

### Zusammenfassung der Erfindung

Die vorgestellte Erfindung hat den Zweck, den Zeitaufwand für elektronische Transaktionen stark zu verringern und zugleich ein sehr hohes Mass an Sicherheit zu gewährleisten. Die sehr niedrigen Herstellkosten und der mögliche Einsatz in standardisierten Geräten oder Terminals sollen eine rasche Verbreitung ermöglichen.

Gegenstand der Erfindung ist die Implementierung eines lokalen Stellvertretermodules (7) für die
Verrechnungszentrale (6) in einem integrierten, gesicherten Element (3). Das Stellvertretermodul (7) kann Bezahlungen und Berechtigungen ohne Datenverbindung zur Verrechnungszentrale (6) überprüfen (11) und freigeben (12) oder verweigern (13). Das integrierte, gesicherte Element (3) gibt es in verschiedenen Ausführungsformen und ist bei Bedarf in ein Terminal (4) integrierbar. Das integrierte, gesicherte Element (3) ist beispielsweise ein einfach nachrüstbarer Teil eines handelsüblichen NFC Mobiltelefons, das dadurch zu einem sicheren Bezahlterminal wird.

Erfindungsgemäss wird dies dadurch erreicht, dass das Stellvertretermodul (7) die Regeln (8) zur Autorisierung (11) von Transaktionen, wie beispielsweise von Bezahlvorgängen, lokal im Speicher des integrierten, gesicherten Elementes (3) verfügbar hat. Die Auswertung der Transaktionsdaten und die Autorisierung (11) laufen ebenfalls innerhalb vom integrierten, gesicherten Element (3) in dessen geschützter Recheneinheit ab, was die Eingriffsicherheit in höchstem Mass gewährleistet. Weiter werden die Buchungsdaten (9), wie beispielsweise Transaktions-Quittungen, im Speicher des integrierten, gesicherten Elementes (3) abgelegt. Damit kann eine Transaktion rasch, sicher und ohne Datenverbindung abgewickelt werden. Die Buchungsdaten (9) und Autorisierungsregeln (8) werden zu einem anderen Zeitpunkt bei bestehender Datenverbindung mit der Verrechnungszentrale (6) abgeglichen (14). Die Anwendung im integrierten, gesicherten Element in Form einer Chipkarte, SIM-Karte, SAM-Karte, SD-Karte oder Secure Element kann durch deren Standardisierung einfach auf bestehende Terminals (4), beispielsweise auf NFC Mobiltelefone verteilt werden.

Die Vorteile der Erfindung bestehen darin, dass durch das lokale Stellvertretermodul (7) die Geschwindigkeit der Autorisierung (11) um Grössenordnungen gesteigert werden kann. Die Implementierung dieser Funktionen in einem integrierten, gesicherten Element (3) gewährt eine sehr hohe Eingriffsicherheit. Die standardisierten Formen integrierter, gesicherter Elemente ermöglicht die Umstellung der Infrastruktur unter Verwendung bestehender NFC Mobiltelefone oder sonstiger Terminals (4). Die Unabhängigkeit des integrierten, gesicherten Elementes (3) vom Bezahlmittel (1), respektive von der Berechtigung, gewährt deren unabhängige und sichere Überprüfung durch das Stellvertretermodul (7). Zusammengefasst kann das System daher sehr einfach, schnell, kostengünstig und sicher realisiert werden.

### Kurze Beschreibung der Zeichnungen

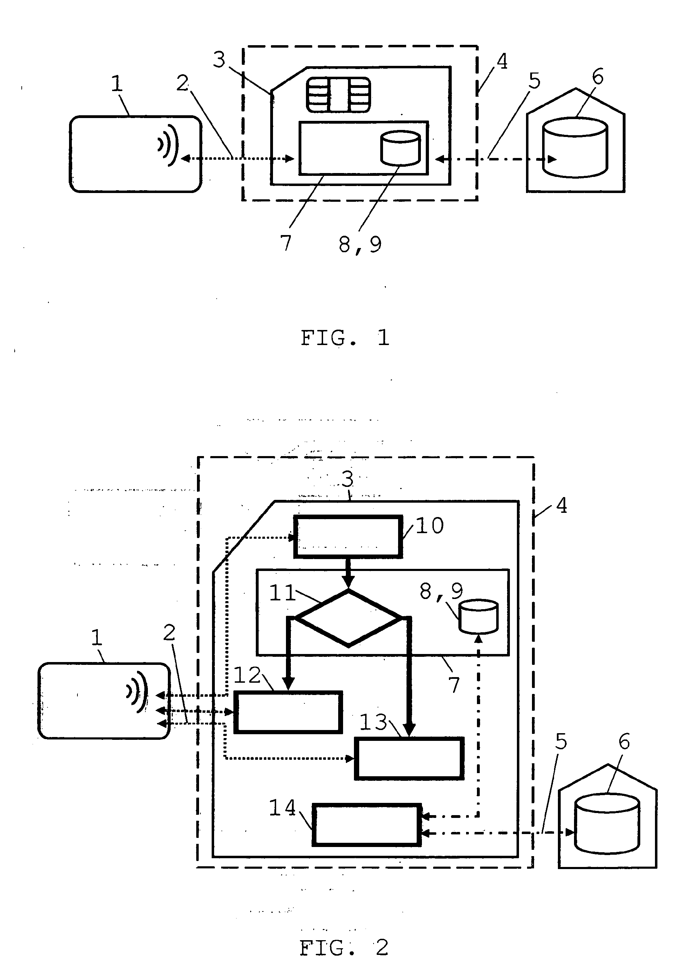

FIG. 1 zeigt schemenhaft die Erfindung in ihrem Systemkontext:
   (1) Mobiles Gerät als Bezahlmittel oder Berechtigungs-Beleg
   (2) Kommunikation zwischen (1) und (3)
   (3) Integriertes, gesichertes Element
   (4) Optionales Terminal
   (5) Kommunikation zwischen (3) und (6)
   (6) Verrechnungszentrale
   (7) Stellvertretermodul
   (8) Autorisierungsregeln und Parameter
   (9) Buchungsdaten
FIG. 2 zeigt das Ablaufschema der Erfindung integriert in die schematische Systemübersicht aus FIG. 1:
   (10) Vorbereitung der Transaktion
   (11) Autorisierung der Transaktion
   (12) Freigabe der Transaktion
   (13) Verweigerung der Transaktion
   (14) Abgleich der Autorisierungsregeln und Parameter (8) sowie der Buchungsdaten (9)

### Detaillierte Beschreibung der Erfindung

Anhand eines einfachen Bezahlsystems wird die Erfindung nachfolgend detailliert beschrieben. Andere Ausführungsformen sind durchaus möglich und am Ende der Beschreibung teilweise erwähnt.

Das Bezahlsystem beinhaltet kontaktlose Bezahlkarten als mobile Geräte (1), wie sie typischerweise auch für elektronische Fahrgeldsysteme eingesetzt werden. Auf der kontaktlosen Bezahlkarte sind beispielsweise Sicherheitsmerkmale und Angaben zum Konto des Bezahlers gespeichert.
Eine SIM-Karte wird als integriertes, gesichertes Element (3) verwendet. Das Stellvertretermodul wird dabei entweder beim Initialisieren der SIM-Karte in sicherer Umgebung geladen, oder aber zu einem späteren Zeitpunkt über den Trusted-Service-Manager gesichert in die SIM-Karte übertragen. Das Stellvertretermodul (7) beinhaltet die Autorisierungsregeln und Parameter (8) um autonom eine Transaktion, also eine Bezahlung, autorisieren zu können. Die SIM-Karte ist in ein Terminal (4) eingesetzt, in diesem Fall ein handelsübliches Mobiltelefon mit NFC, beispielsweise ein Google Nexus S.
Die kontoführende Verrechnungszentrale (6) besteht aus einem Datenbankserver, welcher über Datenkommunikation via Internet erreichbar ist.

Zu Beginn der Transaktion gibt der Verkäufer am Mobiltelefon den zu bezahlenden Betrag ein. Mittels Kommunikation (2) über NFC des Mobiltelefons werden die Sicherheitsmerkmale und Kontoangaben der kontaktlosen Bezahlkarte ausgelesen, was die Vorbereitung (10) der Transaktion abschliesst.

Die Daten werden anschliessend durch das Stellvertretermodul (7) anhand der Autorisierungsregeln und Parameter (8) überprüft (11).
Bei Freigabe (12) der Transaktion, respektive bei Verweigerung (13) der Transaktion werden entsprechende Buchungsdaten (9), das heisst die Transaktions-Quittung, durch das Stellvertretermodul (7) generiert und gespeichert. Das Resultat der Transaktion wird dem Verkäufer auf der Anzeige des Mobiltelefons dargestellt und falls notwendig, über NFC zur Bezahlkarte zurückgemeldet.

Zu einem anderen Zeitpunkt findet der Abgleich (14) der Autorisierungsregeln und Parameter (8) sowie der Buchungsdaten (9), das heisst der Transaktions-Quittungen, zwischen dem Stellvertretermodul (7) und der Verrechnungszentrale (6) über die Datenkommunikation (5) des Mobiltelefons statt.

Bei dieser Ausführungsform könnte das
integrierte, gesicherte Element (3) auch als Secure Element direkt in das Terminal (4) eingebaut oder in anderer Form eingebunden sein, beispielsweise als SD-Karte.
Als Terminal (4) könnte anstelle des Mobiltelefons auch ein kontaktloses Bezahlterminal verwendet werden.

Als Bezahlkarte könnte auch ein Mobiltelefon mit NFC und einer Bezahlanwendung als mobiles Gerät (1) eingesetzt werden. In diesem Fall könnte als integriertes, gesichertes Element (3) eine kontaktlose Chipkarte verwendet werden. Die Kommunikation (2) zur Bezahlanwendung würde über NFC des mobilen Gerätes (1) erfolgen und die Kommunikation (5) zur Verrechnungszentrale (6) über NFC und die Datenkommunikation des mobilen Gerätes (1). In diesem Fall könnte sogar auf den Einsatz eines eigenständigen Terminals (4) verzichtet werden. Wird das integrierte, gesicherte Element (3) in ein konventionell gebautes Bezahlterminal eingesetzt, könnten darüber auch konventionelle Bezahlkarten mit Chip oder Magnetstreifen als mobile Geräte (1) autorisiert werden.

Analog zu oben erwähnten Bezahlsystemen könnte auch ein
Fahrscheinsystem für den öffentlichen Nahverkehr oder ein Ticketing-System oder gemischte Systeme aufgebaut werden.

Neben den hier direkt erwähnten Ausführungsformen gibt es natürlich auch noch viele weitere, mögliche
Ausführungsformen.

## Patentansprüche

1. Elektronisches System zur raschen und sicheren Abwicklung einer Transaktion mit einem mobilen Gerät (1) **dadurch gekennzeichnet, dass** die Autorisierung (11) der Transaktion in einem integrierten, gesicherten Element (3) realisiert ist, wobei die Transaktion durch ein Stellvertretermodul (7) ohne Datenverbindung zu einer Verrechnungszentrale (6) zu einem ersten Zeitpunkt autorisiert wird und zu einem zweiten Zeitpunkt Autorisierungsregeln und Parameter (8) sowie Buchungsdaten (9), wie beispielsweise Transaktions-Quittungen, mit der Verrechnungszentrale (6) abgeglichen werden (14).

2. Elektronisches System nach Anspruch 1, **dadurch gekennzeichnet, dass** das integrierte, gesicherte Element (3) als Hardware oder als Software oder gemischt in eine Chipkarte, in einen Chip mit weiterer Funktionalität oder in anderer Form mit kontaktloser oder kontaktbasierter oder mehrfach ausgeführter Kommunikationsschnittstelle integriert ist, beispielsweise in eine Bezahlkarte, in eine Wertkarte, in eine Berechtigungskarte, in eine SIM-Karte, in ein SAM, in eine Speicherkarte, in eine SD-Karte, in ein Armband, in eine Armbanduhr, in einen Schlüsselanhänger, in einen Dongle, in einen NFC-Chip, als Applet in einen gesicherten Rechner oder Controller, als gesichertes Applet in einen ungesicherten Rechner oder Controller oder in einer anderen spezifischen Hardware.

3. Elektronisches System nach Anspruch 1, **dadurch gekennzeichnet, dass** das Stellvertretermodul (7) als Software oder als Hardware oder in gemischter Form im integrierten, gesicherten Element (3) umgesetzt ist.

4. Elektronisches System nach Anspruch 1, **dadurch gekennzeichnet, dass** als mobiles Gerät (1) eine Chipkarte, ein Mobiltelefon oder ein mobiles Gerät anderer Form mit kontaktloser oder kontaktbasierter oder mehrfach ausgeführter Kommunikationsschnittstelle verwendet wird, beispielsweise in Form einer Bezahlkarte, einer Wertkarte, einer Berechtigungskarte, einem Ticket, einer SIM-Karte, einer Speicherkarte, einer SD-Karte, einem Armband, einer Armbanduhr, eines Schlüsselanhängers, eines Dongles, einer elektronischen Agenda, eines Mobiltelefons oder einer anderen mobilen Hardware.

5. Elektronisches System nach Anspruch 1, **dadurch gekennzeichnet, dass** es sich um eine Bezahltransaktion, wie beispielsweise einer Kreditbezahlung, Debitbezahlung oder Wertabbuchung, oder einer Berechtigungstransaktion, wie beispielsweise einer Zutrittskontrolle, Eintrittskontrolle oder Fahrberechtigungskontrolle, oder einer gemischten Transaktion handelt, welche sowohl eine Bezahltransaktion wie auch eine Berechtigungstransaktion umfasst.

6. Elektronisches System nach Anspruch 1, **dadurch gekennzeichnet, dass** das integrierte, gesicherte Element (3) beispielsweise in Form eines Secure Elements oder einer Chipkarte in ein zertifiziertes oder
unzertifiziertes Terminal (4) integriert ist, beispielsweise in ein Mobiltelefon, in einen Tablet-Computer, in ein Chipkarten-Lesegerät, in einen RFID-Leser, in einen Dongle, in einen elektronischen Entwerter, in ein Bezahlterminal, in ein Verkaufsgerät oder in eine andere spezifische Terminal Hardware.

7. Elektronisches System nach Anspruch 1 oder Anspruch 6, **dadurch gekennzeichnet, dass** das integrierte, gesicherte Element (3) durch das mobile Gerät (1), durch ein Terminal (4), durch ein drittes Gerät oder durch mehrere dieser Geräte bei der Kommunikation (2) mit dem mobilen Gerät (1), beziehungsweise beim Vorbereiten (10) der Transaktion mit dem mobilen Gerät (1), beziehungsweise bei der Nachbearbeitung (12) oder (13) der Transaktion mit dem mobilen Gerät (1), beziehungsweise bei der Kommunikation (5) mit der Verrechnungszentrale (6), beziehungsweise beim Abgleich (14) mit der Verrechnungszentrale (6) unterstützt wird.

8. Elektronisches System nach Anspruch 1 oder Anspruch 6, **dadurch gekennzeichnet, dass** ein Teil der Transaktionsdaten, beispielsweise der Wert der Bezahlung, Angaben zur zeitlichen oder räumlichen Berechtigung oder eine Benutzeridentifikation durch Eingabe am mobilen Gerät (1), am Terminal (4), an einem dritten Gerät oder an mehreren dieser Geräte erfasst oder sonst irgendwie zur Verfügung gestellt werden, beispielsweise über Tasten, über einen berührungsempfindlichen Bildschirm oder über ein Eingabegerät für biometrische Merkmale.

9. Elektronisches System nach Anspruch 1 oder Anspruch 6, **dadurch gekennzeichnet, dass** während der Abwicklung der Transaktion eine gesicherte, beispielsweise verschlüsselte oder signierte, Transaktions-Quittung an das mobile Gerät (1), an das Terminal (4), an ein drittes Gerät oder an mehrere dieser Geräte zur manuellen oder automatischen Überprüfung oder Bestätigung der Transaktion übermittelt wird.

10. Elektronisches System nach Anspruch 1 oder Anspruch 6, **dadurch gekennzeichnet, dass** das Resultat der Transaktion dem Benutzer über das mobile Gerät (1), über das Terminal (4), über ein drittes Gerät oder über mehrere dieser Geräte mitgeteilt wird, beispielsweise visuell, haptisch, akustisch oder durch die Freigabe des Durchganges bei einer Zugangssperre.

11. Elektronisches System nach Anspruch 1 oder Anspruch 6, **dadurch gekennzeichnet, dass** die Kommunikation (2) drahtlos, drahtgebunden oder gemischt, beispielsweise über ISO 14443, NFC, SWP, Bluetooth, USB oder ISO 7816 zwischen dem mobilen Gerät (1) und dem gesicherten Element (3) direkt oder indirekt über das mobile Gerät (1), über das Terminal (4), über ein drittes Gerät oder über mehrere dieser Geräte erfolgt, beispielsweise mit der Unterstützung von Lesern, Controllern oder Rechnern.

12. Elektronisches System nach Anspruch 1 oder Anspruch 6, **dadurch gekennzeichnet, dass** die Kommunikation (5) drahtlos, drahtgebunden oder gemischt, beispielsweise über ISO 14443, NFC, SWP, Bluetooth, USB, ISO 7816, WLAN, Mobilfunk oder Ethernet zwischen dem gesicherten Element (3) und der Verrechnungszentrale (6) direkt oder indirekt über das mobile Gerät (1), über das Terminal (4), über ein drittes Gerät oder über mehrere dieser Geräte erfolgt, beispielsweise mit der Unterstützung von Lesern, Controllern oder Rechnern.
